# EUROPEAN PATENT APPLICATION

(11) **EP 4 060 955 A1**
(43) Date of publication of application: **21.09.2022**
(21) Application number: 20887355.4
(22) Date of filing: 04.11.2020
(51) Int. Cl.: H04L 29/06

(54) **SECURITY METHOD, APPARATUS AND SYSTEM EASY TO ACCESS BY USER**

(30) Priority: 15.11.2019 CN 201911121157
(71) Applicant: ZTE Corporation, Shenzhen, Guangdong 518057 (CN)
(72) Inventor: LIU, Zhilong, Shenzhen, Guangdong 518057 (CN)
(74) Representative: Vossius & Partner Patentanwälte Rechtsanwälte mbB
(86) International application number: PCT/CN2020/126509
(87) International publication number: WO 2021/093653

(57) **Abstract**

Embodiments of the present disclosure disclose a security method, an apparatus and a system readily accessible by a user. The method comprises: receiving a request transmitted by a video display apparatus for obtaining a monitoring video; obtaining the monitoring video and an access protocol format requested by the video display apparatus based on the request for obtaining the monitoring video; determining whether a provided protocol format of the monitoring video matches the access protocol format by comparing the provided protocol format and the access protocol format; and in response to the provided protocol format not matching the access protocol format, converting the monitoring video in the provided protocol format into a monitoring video in the access protocol format, and transmitting the monitoring video in the access protocol format to the video display apparatus.

## Description

### CROSS-REFERENCE TO RELATED APPLICATION

The present disclosure claims the priority of Chinese patent application CN201911121157.9, filed on November 15, 2019 and entitled "Security Method, Apparatus and System Easy to Access by User", the entire contents of which are incorporated herein by reference.

### FIELD

Embodiments of the present disclosure relate to the field of security and video monitoring, and particularly to a security method, an apparatus and a system readily accessible by a user.

### BACKGROUND

With constant development of software technologies and Internet technologies, in the field of security, the user is no longer only satisfied with monitoring centers or monitoring screens of security rooms in terms of display platforms of monitoring video. The user hopes to easily access a security system to look up a monitoring video at various sites such as office or home in many ways such as a personal computer (PC) client, a WEB webpage, a mobile phone application (APP), or a WeChat applet.

However, what are provided by cameras currently available in the market are mostly data according to an open network video interface forum (ONVIF) protocol and a GB28181 protocol. The ONVIF protocol camera provides media streams through a Real Time Streaming Protocol (RTSP), while the GB28181 protocol camera provides media streams through a Real-Time Transport Protocol + Session Initiation Protocol (RTP+SIP). None of the two protocols is adapted to be used in an Internet environment using a Real Time Messaging Protocol (RTMP) and a HTTP Live Streaming (HLS) protocol and so on. The user has to look up the monitoring video through a client supporting a corresponding protocol, which causes platforms and manners of looking up the monitoring video of the security system to be single.

### SUMMARY

In view of the above technical problems, the present disclosure provides a security method, an apparatus and a system readily accessible by a user, which solve the problems in the conventional security system that the lookup platform and lookup manner of a user monitoring video is single and the monitoring video is difficult to be transmitted and looked up in the Internet environment.

There is provided in the present disclosure a security method readily accessible by a user according to embodiments of the present disclosure, includes: receiving a request transmitted by a video display apparatus for obtaining a monitoring video; obtaining the monitoring video and an access protocol format requested by the video display apparatus based on the request for obtaining the monitoring video; determining whether a provided protocol format of the monitoring video matches the access protocol format by comparing the provided protocol format and the access protocol format; and in response to the provided protocol format not matching the access protocol format, converting the monitoring video in the provided protocol format into a monitoring video in the access protocol format, and transmitting the monitoring video in the access protocol format to the video display apparatus.

There is provided a security device readily accessible by a user according to embodiments of the present disclosure, includes a memory, a processor, and a computer program stored in the memory and executable on the processor, the computer program, when executed by the processor, performing the steps of the security method readily accessible by a user described above.

There is provided a security system readily accessible by a user according to embodiments of the present disclosure, includes: a video capture apparatus configured to capture a monitoring video; a video display apparatus configured to display the monitoring video; the security system further includes: a security apparatus readily accessible by a user, configured to: receive a request transmitted by a video display apparatus for obtaining a monitoring video; obtain the monitoring video and an access protocol format requested by the video display apparatus based on the request for obtaining the monitoring video; determine whether a provided protocol format of the monitoring video matches the access protocol format by comparing the provided protocol format and the access protocol format; in response to the provided protocol format not matching the access protocol format, convert the monitoring video in the provided protocol format into a monitoring video in the access protocol format; and transmit the monitoring video in the access protocol format to the video display apparatus.

There is provided a computer-readable medium having stored thereon a program of a security method readily accessible by a user according to embodiments of the present disclosure, the program of the security method readily accessible by a user, when executed by a processor, performing the steps of the security method readily accessible by a user described above.

### BRIEF DESCRIPTION OF THE DRAWINGS

FIG. 1 is a flowchart of a security method readily accessible by a user according to embodiments of the present disclosure;
FIG. 2 is a schematic diagram of a security system readily accessible by a user according to embodiments of the present disclosure;
FIG. 3 is a schematic diagram of a processing portion of FIG. 2;
FIG. 4 is a schematic diagram showing conversion of an RTSP protocol according to embodiments of the present disclosure;
FIG. 5 is a schematic diagram showing conversion of an RTP+SIP protocol according to embodiments of the present disclosure;
FIG. 6 is a schematic structural diagram of a security apparatus readily accessible by a user according to embodiments of the present disclosure; and
FIG. 7 is a schematic structural diagram of a security apparatus readily accessible by a user according to embodiments of the present disclosure.

### DETAILED DESCRIPTION

Example embodiments of the present disclosure will be described in detail below with reference to the accompanying drawings. It should be understood that the example embodiments described below are only used to illustrate and explain the present disclosure, but not to limit the present disclosure.

A security method readily accessible by a user provided according to embodiments of the present disclosure includes: receiving a request transmitted by a video display apparatus for obtaining a monitoring video; obtaining a monitoring video and an access protocol format requested by the video display apparatus based on the request for obtaining the monitoring video; determining whether a provided protocol format of the monitoring video matches the access protocol format by comparing the provided protocol format and the access protocol format; in response to the provided protocol format not matching the access protocol format, converting the monitoring video in the provided protocol format into a monitoring video in the access protocol format; and transmitting the monitoring video in the access protocol format to the video display apparatus. The embodiments of the present disclosure achieve a conversion between different media formats, thereby supporting the user to use protocols such as RTSP, RTMP and HLS to access the system to look up the monitoring video, achieving the automatic adaptation function of the system to different access protocols, and greatly expanding the look-up platforms and lookup manners of the monitoring video so that the user may easily access the security system and the user experience of the security system is improved.

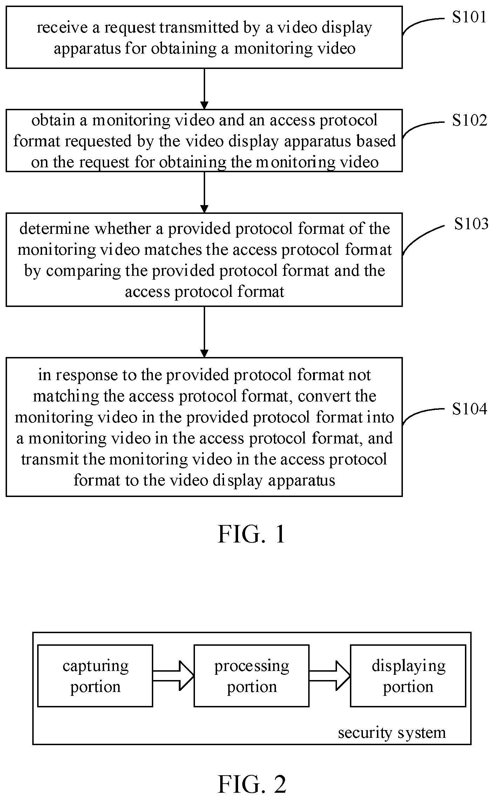

FIG. 1 is a flowchart of a security method readily accessible by a user according to embodiments of the present disclosure. As shown in FIG. 1 , the method may include the following steps:
Step S101: receive a request transmitted by a video display apparatus for obtaining a monitoring video.

A security apparatus readily accessible by the user receives the request transmitted by a video display apparatus for obtaining the monitoring video, where the monitoring video is captured by a video capture apparatus.

The video capture apparatus may include at least one camera, i.e., include one or more cameras, and the camera may be an ONVIF protocol camera, a GB28181 protocol camera, or the like.

The video display apparatus may include a PC client, a web page, a mobile phone APP, a WeChat applet, and the like.

The request for obtaining the monitoring video may be a request (or a real-time play request) for obtaining real-time monitoring video of at least one camera, or a request (or a playback request) for obtaining historical monitoring video of at least one camera, etc.

Before performing step S101, the method may further include: transmitting, based on pre-stored data related to the video capture apparatus, a to-be-online message to the video capture apparatus to inform the video capture apparatus to be online; obtaining the monitoring video from the online video capture apparatus, and saving the monitoring video. Furthermore, the security apparatus readily accessible by the user obtains pre-stored camera-related data such as a camera device identification, location, and employed standard (such as an ONVIF protocol or GB28181 protocol), etc., transmits a to-be-online message to a corresponding camera based on the camera-related data to inform the corresponding camera to be online; and then obtains from the corresponding online camera the monitoring video captured by the corresponding camera, and saves the monitoring video captured by the corresponding camera.

Step S102: obtain the monitoring video and an access protocol format requested by the video display apparatus based on the request for obtaining the monitoring video.

The security apparatus readily accessible by the user obtains the monitoring video and the access protocol format requested by the video display apparatus based on the request for obtaining the monitoring video. Furthermore, the security apparatus readily accessible by the user parses the request for obtaining the monitoring video, and obtains the monitoring video and the access protocol format (such as the RTSP protocol format, the RTMP protocol format or the HLS protocol format) requested by the video display apparatus.

Step S103: determine whether a provided protocol format of the monitoring video matches the access protocol format by comparing the provided protocol format and the access protocol format.

The security apparatus readily accessible by the user obtains the provided protocol format (such as the RTSP protocol format, the RTP+SIP protocol format, etc.) of the monitoring video it may provide, compares the provided protocol format and the access protocol format, and determines whether the provided protocol format and the access protocol format are matched.

If the provided protocol format is the same as the access protocol format, this means that the provided protocol format matches the access protocol format. If the provided protocol format is different from the access protocol format, this means that the provided protocol format does not match the access protocol format, whereupon conversion between different media formats needs to be performed.

Step S104: in response to the provided protocol format not matching the access protocol format, convert the monitoring video in the provided protocol format into a monitoring video in the access protocol format, and transmit the monitoring video in the access protocol format to the video display apparatus.

When the security apparatus readily accessible by the user determines that the provided protocol format does not match the access protocol format, the security apparatus readily accessible by the user converts the monitoring video in the provided protocol format into the monitoring video in the access protocol format, and transmits the monitoring video in the access protocol format to the video display apparatus.

When the provided protocol format is the RTSP protocol format, and the access protocol format is the RTMP protocol format or the HLS protocol format, the security apparatus readily accessible by the user converts the monitoring video in the RTSP protocol format into the monitoring video in the corresponding RTMP protocol format or HLS protocol format.

When the provided protocol format is the RTP+SIP protocol format, and the access protocol format is the RTSP protocol format, RTMP protocol format or HLS protocol format, the security apparatus readily accessible by the user coverts the monitoring video in the RTP+SIP protocol format into the monitoring video in the corresponding RTSP protocol format, RTMP protocol format or HLS protocol format.

In one embodiment, when the security apparatus readily accessible by the user determines that the provided protocol format matches the access protocol format, the security apparatus readily accessible by the user transmits the monitoring video to the video display apparatus directly. For example, when both the provided protocol format and the access protocol format are the RTSP protocol format, the security apparatus readily accessible by the user transmits the monitoring video to the video display apparatus directly.

The method provided by embodiments of the present disclosure achieves a conversion between different media formats when the provided protocol format of the monitoring video does not match the access protocol format of the monitoring video, thereby supporting the user to use protocols such as RTSP, RTMP and HLS to access the system to look up the monitoring video, and achieving the automatic adaptation function of the system to different access protocols.

The method readily accessible by the user according to embodiments of the present disclosure may be applied to a security system. When the security system is deployed, it includes a capturing portion for capturing a monitoring video (or referred to as the video capture apparatus), a displaying portion for displaying the monitoring video (or referred to as the video display apparatus), and a processing portion (or referred to as the security apparatus readily accessible by the user) located between the capturing portion (or referred to as the video capture apparatus) and the displaying portion (or referred to as the video display apparatus). FIG. 2 is a schematic diagram of a security system readily accessible by a user according to embodiments of the present disclosure, as shown in FIG. 2.

The capturing portion: mainly completes capturing the monitoring video, and transmitting the captured media data to the processing portion. The capturing portion consists of several cameras that support the ONVIF protocol or GB28181 protocol. The cameras are deployed at locations where the monitoring video needs to be captured.

The processing portion: mainly completes the processing of the monitoring video. In one embodiment, the processing portion is configured to receive the request transmitted by a video display apparatus for obtaining the monitoring video; obtain the monitoring video and the access protocol format requested by the video display apparatus based on the request for obtaining the monitoring video; determine whether a provided protocol format of the monitoring video matches the access protocol format by comparing the provided protocol format and the access protocol format; in response to the provided protocol format not matching the access protocol format, convert the monitoring video in the provided protocol format into the monitoring video in the access protocol format; and transmit the monitoring video in the access protocol format to the video display apparatus.

The displaying portion: mainly completes the display of the monitoring video. The displaying portion may include PC client software, a WEB webpage, a mobile APP and a WeChat applet etc. The PC client software may be deployed in the monitoring center or security room; the WEB webpage may be deployed at a background WEB server to provide WEB webpage access services; the mobile APP and WeChat applet may be deployed at the mobile phone side.

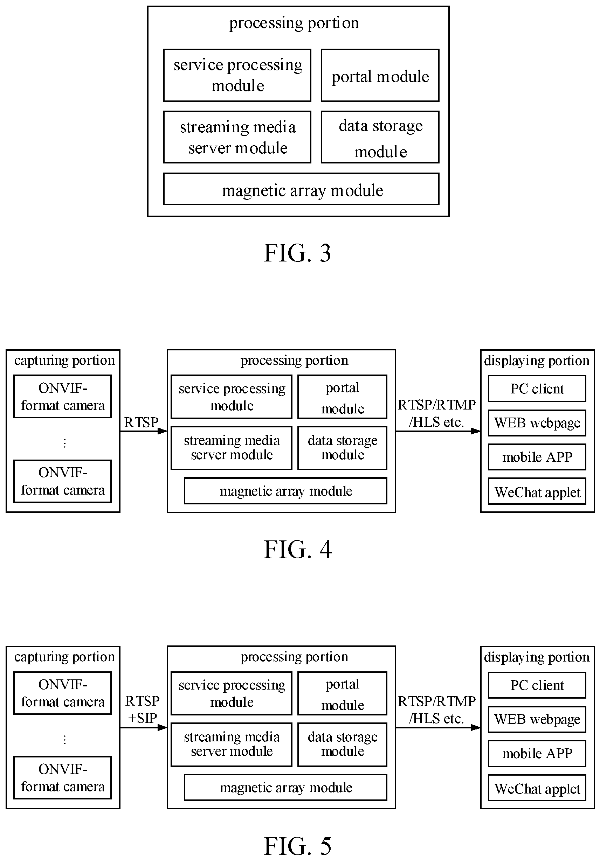

FIG. 3 is a schematic structural diagram of the processing portion of FIG. 2. As shown in FIG. 3, the processing portion includes a service processing module, a streaming media server module, a data storage module, a magnetic array module and a portal module.

The service processing module mainly completes functions such as the access of the capturing portion and the displaying portion, the real-time play of the monitoring video, the playback of the monitoring video, and the recording of the monitoring video.

The streaming media processing module mainly completes functions such as obtaining the monitoring video, forwarding the monitoring video, and converting the media format. The streaming media processing module may perform media protocol conversion adaptively based on different access protocols of the displaying portion, to achieve a function of automatically converting and matching the media protocol.

The data storage module mainly completes the storage of service data, including user account-opening data, access data of the cameras of the capturing portion, a record of user requests etc.

The magnetic array module mainly completes the storage of the monitoring video.

The portal module mainly completes functions related to human-computer interaction, including configuration of the cameras of the capturing portion, configuration related to the users' account opening, and configuration related to service configurations etc.

It should be appreciated that the data storage module and the magnetic array module are deployed separately, and the service processing module, the streaming media server module and the portal module may be deployed according to a specific system scale, and may be deployed in combination or separately.

The workflow of the security system readily accessible by the user described in this embodiment is as follows.

Step 1: the portal module configures data of the cameras (hereinafter referred to as PU) of the capturing portion and data of the client (hereinafter referred to as CU) of the displaying portion, and writes relevant data into the data storage module.

Step 2: the service processing module obtains PU-related data from the data storage module, and transmits a to-be-online message to the PU to inform the PU to be online, and then the service processing module transmits a PU online message to the streaming media server module.

Step 3: The streaming media server module obtains real-time media data from the PU, and then stores the data in the magnetic array module. The saving time of the media data may be set at the portal module. If the CU wants to look up the real-time monitoring video, the streaming media server module will forward the real-time media data to the CU. During the forwarding of the real-time media data, the streaming media server module will adaptively convert the media protocol based on a protocol requested by the CU, and convert the protocol format of the real-time media obtained from the PU to the protocol format requested by the CU, thereby achieving the automatic adaptation function for media protocol conversion.

Step 4: When the CU wants to play back the monitoring video, the CU will transmit a corresponding request to the service processing module, and the service processing module transmits the request to the streaming media server module. The streaming media server module obtains corresponding media data from the magnetic array module and transmits the media data to the CU, to complete the function of playing back the monitoring video.

The media conversion design portion involved in the security system and method readily accessible by the user according to the present embodiment is completed by the streaming media server module, mainly including the following two cases.

First, convert the media stream in the RTSP format into a format such as RTMP and HLS, as shown in FIG. 4. Such a conversion may convert the media in the RTSP format provided by the camera in the ONVIF format into a format such as RTMP and HLS, so that various applications (such as the PC client, WEB webpage, mobile APP, WeChat applet, etc.) of the displaying portion may play the camera video in a format such as RTSP, RTMP and HLS based on their own needs.

Secondly, convert the media stream in the RTP+SIP format into a format such as RTSP, RTMP and HLS, as shown in FIG. 5. Such a conversion may convert the media stream in the RTP+SIP format provided by the camera in GB28181 format into a format such as RTSP, RTMP and HLS, so that various applications (such as the PC client, WEB page, mobile APP, WeChat applet, etc.) of the displaying portion may play the camera video in a format such as RTSP, RTMP and HLS based on their own needs.

It should be appreciated that, in the specific implementation process of media protocol conversion, when each frame of data is processed, if the data of a frame is too large, e.g., if frame I is too large, the problem that the video is stuck might occur when the video is played at this time. Therefore, in the present system, the RTP packet is processed, the original format is parsed, then the media is encapsulated in a target format to which the conversion is directed, and then is directly forwarded, thereby avoiding the problem of the stuck in video play due to excessively large data in the frame.

As compared with the prior art, the present embodiment solves the problems in the conventional security system that the lookup platform and lookup manner of the user monitoring video is single and the monitoring video is difficult to be transmitted and looked up in the Internet environment. The present embodiment achieves a conversion between different media formats, supports to look up the monitoring video through a system accessed by a protocol such as RTSP, RTMP and HLS, thereby achieving the automatic adaptation function of the system to different access protocols, and greatly expanding the look-up platforms and lookup manners of the monitoring video so that the user may easily access the security system and the user experience of the security system is improved.

### Application embodiment 1

The capturing portion uses the ONVIF camera, and the displaying portion uses the RTMP protocol to play monitoring video. The portal module configures data of the cameras and data of the client of the displaying portion. The portal module will write the relevant data into the data storage module. The service processing module obtains PU-related data from the data storage module, and transmits a to-be-online message to the PU to inform the PU to be online, and then the service processing module transmits a PU online message to the streaming media server module. The streaming media server module obtains media stream in the RTSP format from the online PU, and then stores the data, after being decoded, in the magnetic array module. The saving time of the media data may be set at the portal module. The CU pulls the media streams of the corresponding cameras to the streaming media server module through the RTMP protocol, and the streaming media server module performs a media conversion to convert the media streams in the RTSP format into the media streams in the RTMP format, and then transmits the media streams in the RTMP format to the PU for real-time lookup.

### Application embodiment 2

The capturing portion uses the ONVIF camera, and the displaying portion uses the RTSP protocol to play monitoring video. The portal module configures data of the cameras and data of the client of the displaying portion. The portal module will write, the relevant data into the data storage module. The service processing module obtains PU-related data from the data storage module, and transmits a to-be-online message to the PU to inform the PU to be online, and then the service processing module transmits a PU online message to the streaming media server module. The streaming media server module obtains media stream in the RTSP format from the online PU, and then stores the data, after being decoded, in the magnetic array module. The saving time of the media data may be set at the portal module. The CU pulls the media streams of the corresponding cameras to the streaming media server module through the RTSP protocol. The streaming media server module performs media judges that there is no need for media conversion, and directly transmits the media streams in the RTSP format to the PU for real-time lookup.

### Application embodiment 3

The capturing portion uses the ONVIF camera, and the displaying portion uses the HLS protocol to play monitoring video. The portal module configures data of the cameras and data of the client of the displaying portion. The portal module will write the relevant data into the data storage module. The service processing module obtains PU-related data from the data storage module, and transmits a to-be-online message to the PU to inform the PU to be online, and then the service processing module transmits a PU online message to the streaming media server module. The streaming media server module obtains media stream in the RTSP format from the online PU, and then stores the data, after being decoded, in the magnetic array module. The saving time of the media data may be set at the portal module. The CU pulls the media streams of the corresponding cameras to the streaming media server module through the HLS protocol, and the streaming media server module performs a media conversion to convert the media streams in the RTSP format into the media streams in the HLS format, and then transmits the media streams in the HLS format to the PU for real-time lookup.

### Application embodiment 4

The capturing portion uses the GB28181 camera, and the displaying portion uses the RTMP protocol to play monitoring video. The portal module configures data of the cameras and data of the client of the displaying portion. The portal module will write the relevant data into the data storage module. The service processing module obtains PU-related data from the data storage module, and transmits a to-be-online message to the PU to inform the PU to be online, and then the service processing module transmits a PU online message to the streaming media server module. The streaming media server module obtains media stream in the RTP+SIP format from the online PU, and then stores the data, after being decoded, in the magnetic array module. The saving time of the media data may be set at the portal module. The CU pulls the media streams of the corresponding cameras to the streaming media server module through the RTMP protocol, and the streaming media server module performs a media conversion to convert the media streams in the RTP+SIP format into the media streams in the RTMP format, and then transmits the media streams in the RTMP format to the PU for real-time lookup.

### Application embodiment 5

The capturing portion uses the GB28181 camera, and the displaying portion uses the RTSP protocol to play monitoring video. The portal module configures data of the cameras and data of the client of the displaying portion. The portal module will write the relevant data into the data storage module. The service processing module obtains PU-related data from the data storage module, and transmits a to-be-online message to the PU to inform the PU to be online, and then the service processing module transmits a PU online message to the streaming media server module. The streaming media server module obtains media stream in the RTP+SIP format from the online PU, and then stores the data, after being decoded, in the magnetic array module. The saving time of the media data may be set at the portal module. The CU pulls the media streams of the corresponding cameras to the streaming media server module through the RTSP protocol, and the streaming media server module performs a media conversion to convert the media streams in the RTP+SIP format into the media streams in the RTSP format, and then transmits the media streams in the RTSP format to the PU for real-time lookup.

### Application embodiment 6

The capturing portion uses the GB28181 camera, and the displaying portion uses the HLS protocol to play monitoring video. The portal module configures data of the cameras and data of the client of the displaying portion. The portal module will write the relevant data into the data storage module. The service processing module obtains PU-related data from the data storage module, and transmits a to-be-online message to the PU to inform the PU to be online, and then the service processing module transmits a PU online message to the streaming media server module. The streaming media server module obtains media stream in the RTP+SIP format from the online PU, and then stores the data, after being decoded, in the magnetic array module. The saving time of the media data may be set at the portal module. The CU pulls the media streams of the corresponding cameras to the streaming media server module through the HLS protocol, and the streaming media server module performs a media conversion to convert the media streams in the RTP+SIP format into the media streams in the HLS format, and then transmits the media streams in the HLS format to the PU for real-time lookup.

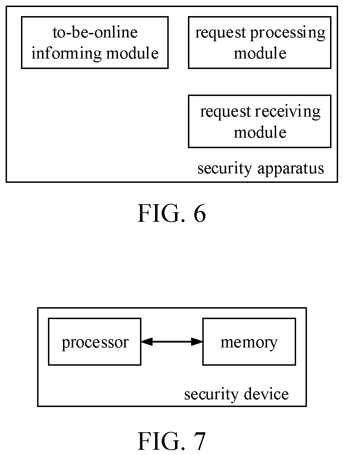

Embodiments of the present disclosure further provide a security apparatus readily accessible by the user. As shown in FIG. 6, the apparatus includes a request receiving module and a request processing module.

The request receiving module (which may achieve the function of the service processing module in FIG. 3) is configured to receive a request transmitted by a video display apparatus for obtaining a monitoring video, where the monitoring video is captured by the video capture apparatus. The video capture apparatus may include at least one camera, i.e., include one or more cameras, and the camera may be an ONVIF protocol camera, a GB28181 protocol camera, or the like. The video display apparatus may include a PC client, a WEB webpage, a mobile phone APP, a WeChat applet, or the like. The request for obtaining the monitoring video may be a request (or a real-time play request) for obtaining real-time monitoring video of at least one camera, or a request (or a playback request) for obtaining historical monitoring video of at least one camera.

The request processing module (which may achieve the function of the streaming media server module in FIG. 3) is configured to obtain the monitoring video and an access protocol format requested by the video display apparatus based on the request for obtaining the monitoring video, determine whether a provided protocol format of the monitoring video matches the access protocol format by comparing the provided protocol format and the access protocol format; in response to the provided protocol format not matching the access protocol format, convert the monitoring video in the provided protocol format into the monitoring video in the access protocol format; and transmit the monitoring video in the access protocol format to the video display apparatus. The request processing module parses the request for obtaining the monitoring video to obtain the monitoring video and the access protocol format (such as the RTSP protocol format, the RTMP protocol format or the HLS protocol format) requested by the video display apparatus. The request processing module obtains the provided protocol format of the monitoring video it may provide, such as the RTSP format, the RTP+SIP format, etc. If the provided protocol format is the same as the access protocol format, the request processing module determines that the provided protocol format matches the access protocol format, and there is no need to perform media format conversion at this point. The monitoring video may be transmitted to the video displaying apparatus directly. For example, when the provided protocol format and the access protocol format are both the RTSP format, the request processing module directly transmits the monitoring video to the video display apparatus. If the provided protocol format is different from the access protocol format, the request processing module determines that the provided protocol format does not match the access protocol format, and the conversion between different media formats is needed to be performed at this point. For example, when the provided protocol format is the RTSP protocol format, and the access protocol format is the RTMP protocol format or the HLS protocol format, the request processing module converts the monitoring video in the RTSP protocol format into the monitoring video in the corresponding RTMP protocol format or HLS protocol format; when the provided protocol format is the RTP+SIP protocol format, and the access protocol format is the RTSP protocol format or RTMP protocol format or HLS protocol format, the request processing module converts the monitoring video in the RTSP protocol format into the monitoring video in corresponding RTSP protocol format, RTMP protocol format or HLS protocol format.

In addition, the apparatus may further include: a to-be-online informing module (which may achieve the function of the service processing module in FIG. 3) configured to, prior to receiving the request transmitted by the video display apparatus for obtaining the monitoring video, transmit based on pre-stored data related to the video capture apparatus and data related to the video capture apparatus, a to-be-online message to the video capture apparatus to inform the video capture apparatus to be online so that the request processing module obtains the monitoring data captured by the video capture apparatus from the online video capture apparatus and saves the monitoring data captured by the video capture apparatus.

When the provided protocol format does not match the access protocol format, the apparatus according to embodiments of the present disclosure achieves the conversion between different media formats, thereby supporting the user to use protocols such as RTSP, RTMP and HLS to access the system to look up the monitoring video, and achieving the automatic adaptation function of the system to different access protocols.

Embodiments of the present disclosure further provide a schematic structural diagram of a security device readily accessible by a user. As shown in FIG. 7, the security device includes a memory, a processor, and a computer program stored in the memory and executable on the processor. The computer program, when executed by the processor, performs the steps of the security method readily accessible by the user described above.

Embodiments of the present disclosure further provide a computer-readable medium having a program of a security method readily accessible by the user stored thereon, the program of the security method readily accessible by the user, when executed by a processor, performing the steps of the security method readily accessible by the user described above.

The embodiments of the present disclosure achieve a conversion between different media protocols, and support the user to use protocols such as RTSP, RTMP and HLS to access the security system to look up the monitoring video. As such, the monitoring video (or media stream) may be transmitted in the Internet environment, which extremely expands the look-up platforms and lookup manners of the monitoring video so that the user may easily access the security system and the user experience of the security system is improved.

Those having ordinary skill in the art may understand that all or some of the steps in the method, functional modules/units in the system or apparatus disclosed above may be implemented as software, firmware, hardware, and appropriate combinations thereof. In a hardware implementation, the division between functional modules/units mentioned in the above description does not necessarily correspond to the division of physical components; for example, one physical component may have multiple functions, or one function or step may be performed by several physical components in cooperation. Some or all physical components may be implemented as software executed by a processor, such as a central processing unit, digital signal processor or microprocessor, or implemented as hardware, or implemented as an integrated circuit, such as a dedicated integrated circuit. Such software may be distributed on computer-readable media, which may include a computer storage medium (or non-transitory medium) and communication medium (or transitory medium). As is known to those of ordinary skill in the art, the term computer storage medium includes a volatile and non-volatile, removable and non-removable medium implemented in any method or technique for storing information such as a computer-readable instruction, data structure, program module or other data. The computer storage media include, but not limited to, RAM, ROM, EEPROM, flash memory or other memory technologies, CD-ROM, digital Versatile Disk (DVD) or other optical disk storage, magnetic cartridges, magnetic tape, magnetic disk storage or other magnetic storage devices, or any other media that may be used to store desired information and may be accessed by the computer. In addition, as well known by those of ordinary skill in the art, communication media usually contain computer readable instructions, data structures, program modules, or other data in a modulated data signal such as a carrier or other transmission mechanisms, and may include any information delivery media.

Although the present disclosure has been described in detail above, the present disclosure is not limited thereto, and various modifications can be made by those skilled in the art in accordance with the principles of the present disclosure. Therefore, all modifications made according to the principles of the present disclosure should be understood as falling within the protection scope of the present disclosure.

## Claims

1. A security method readily accessible by a user, comprising:
receiving a request transmitted by a video display apparatus for obtaining a monitoring video;
obtaining the monitoring video and an access protocol format requested by the video display apparatus based on the request for obtaining the monitoring video;
determining whether a provided protocol format of the monitoring video matches the access protocol format by comparing the provided protocol format and the access protocol format; and
in response to the provided protocol format not matching the access protocol format, converting the monitoring video in the provided protocol format into a monitoring video in the access protocol format, and transmitting the monitoring video in the access protocol format to the video display apparatus.

2. The method of claim 1, wherein prior to receiving the request transmitted by the video display apparatus for obtaining the monitoring video, the method further comprises:
transmitting, based on pre-stored data related to a video capture apparatus, a to-be-online message to the video capture apparatus to inform the video capture apparatus to be online;
obtaining the monitoring video from the online video capture apparatus; and
saving the monitoring video.

3. The method of claim 1, wherein obtaining the monitoring video and the access protocol format requested by the video display apparatus based on the request for obtaining the monitoring video comprises:
parsing the request for obtaining the monitoring video to obtain the monitoring video and the access protocol format requested by the video display apparatus.

4. The method of claim 1, wherein in response to the provided protocol format not matching the access protocol format, converting the monitoring video in the provided protocol format into the monitoring video in the access protocol format comprises:
in response to the provided protocol format being a real time streaming protocol, RTSP, format and the access protocol format being a real time messaging protocol, RTMP, format or an HTTP live streaming, HLS, protocol format, converting the monitoring video in the RTSP protocol format into a corresponding monitoring video in the RTMP protocol format or the HLS protocol format;
in response to the provided protocol format being a real-time transport protocol + session initiation protocol, RTP+SIP, protocol format and the access protocol format being the RTSP protocol format, the RTMP protocol format or the HLS protocol format, converting the monitoring video in the RTP+SIP protocol format into a corresponding monitoring video in the RTSP protocol format, the RTMP protocol format or the HLS protocol format.

5. The method of any one of claims 1-4, wherein the method further comprises:
in response to the provided protocol format matching the access protocol format, transmitting the monitoring video to the video display apparatus directly.

6. A security apparatus readily accessible by a user, comprising:
a request receiving module configured to receive a request transmitted by a video display apparatus for obtaining a monitoring video; and
a request processing module configured to: obtain the monitoring video and an access protocol format requested by the video display apparatus based on the request for obtaining the monitoring video; determine whether a provided protocol format of the monitoring video matches the access protocol format by comparing the provided protocol format and the access protocol format; in response to the provided protocol format not matching the access protocol format, convert the monitoring video in the provided protocol format into a monitoring video in the access protocol format; and transmit the monitoring video in the access protocol format to the video display apparatus.

7. The apparatus of claim 6, wherein the apparatus further comprises:
a to-be-online informing module configured to, prior to receiving the request transmitted by the video display apparatus for obtaining the monitoring video, transmit, based on pre-stored data related to a video capture apparatus, a to-be-online message to the video capture apparatus to inform the video capture apparatus to be online, so as to obtain the monitoring video from the online video capture apparatus and save the monitoring video.

8. A security device readily accessible by a user, comprising a memory, a processor, and a computer program stored in the memory and executable on the processor, the computer program, when executed by the processor, performing the steps of the security method readily accessible by a user of any one of claims 1-5.

9. A security system readily accessible by a user, comprising:
a video capture apparatus configured to capture a monitoring video;
a video display apparatus configured to display the monitoring video;
wherein the security system further comprises:
a security apparatus readily accessible by a user, configured to: receive a request transmitted by a video display apparatus for obtaining a monitoring video; obtain the monitoring video and an access protocol format requested by the video display apparatus based on the request for obtaining the monitoring video; determine whether a provided protocol format of the monitoring video matches the access protocol format by comparing the provided protocol format and the access protocol format; in response to the provided protocol format not matching the access protocol format, convert the monitoring video in the provided protocol format into a monitoring video in the access protocol format; and transmit the monitoring video in the access protocol format to the video display apparatus.

10. A computer-readable medium having stored thereon a program of a security method readily accessible by a user, the program of the security method readily accessible by a user, when executed by a processor, performing the steps of the security method readily accessible by a user of any one of claims 1-5.
